# EUROPÄISCHE PATENTSCHRIFT

(11) **EP 3 510 224 B1**
(45) Veröffentlichungstag und Bekanntmachung des Hinweises auf die Patenterteilung: **21.04.2021**
(21) Anmeldenummer: 17761873.3
(22) Anmeldetag: 05.09.2017
(51) Int. Cl.: E05F 11/48, E05F 15/697

(54) **ANTRIEBSVORRICHTUNG FÜR EINEN FENSTERHEBER**
DRIVE DEVICE FOR A WINDOW REGULATOR
SYSTÈME DE COMMANDE POUR LÈVE-VITRE

(30) Priorität: 06.09.2016 DE 102016216876
(43) Veröffentlichungstag der Anmeldung: 17.07.2019
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE)
(74) Vertreter: Maikowski & Ninnemann Patentanwälte Partnerschaft mbB
(86) Internationale Anmeldenummer: PCT/EP2017/072229
(87) Internationale Veröffentlichungsnummer: WO 2018/046491

(56) Entgegenhaltungen:
- EP-A2- 1 231 350
- WO-A2-99/47779
- KR-A- 20130 073 580
- US-A1- 2006 105 877

## Beschreibung

Die Erfindung betrifft eine Antriebsvorrichtung für eine Verstelleinrichtung zum Verstellen eines Fahrzeugteils, insbesondere eines Fensterhebers, nach dem Oberbegriff des Anspruchs 1.

Eine derartige Antriebsvorrichtung umfasst ein Trägerelement, eine Seiltrommel, ein an einer ersten Seite des Trägerelements angeordnetes Seilausgangsgehäuse, ein durch eine Motoreinheit antreibbares Antriebsrad und ein an einer von der ersten Seite abgewandten, zweiten Seite des Trägerelements angeordnetes Antriebsgehäuse. Das Seilausgangsgehäuse weist ein erstes Lagerelement zum drehbaren Lagern der Seiltrommel um eine erste Drehachse auf. Das Antriebsgehäuse weist demgegenüber ein zweites Lagerelement zum drehbaren Lagern des Antriebsrads um eine zweite Drehachse auf.

Eine derartige Antriebsvorrichtung kann insbesondere Bestandteil einer Fensterhebereinrichtung sein und somit zum Verstellen einer Fensterscheibe dienen. Eine solche Antriebsvorrichtung kann aber auch zum Verstellen eines anderen Verstellelements, beispielsweise eines Schiebedachs oder dergleichen, in einem Fahrzeug dienen.

Bei einem Fensterheber können beispielsweise an einem Aggregateträger eines Türmoduls ein oder mehrere Führungsschienen angeordnet sein, an denen je ein mit einer Fensterscheibe gekoppelter Mitnehmer geführt ist. Der Mitnehmer ist über ein biegeschlaffes, zur Übertragung von (ausschließlich) Zugkräften ausgelegtes Zugseil mit der Antriebsvorrichtung gekoppelt, wobei das Zugseil derart an der Seiltrommel angeordnet ist, dass sich bei einer Drehbewegung der Seiltrommel das Zugseil mit einem Ende auf die Seiltrommel aufwickelt und mit einem anderen Ende von der Seiltrommel abwickelt. Es kommt somit zu einem Verschieben einer durch das Zugseil gebildeten Seilschlaufe und dementsprechend zu einem Bewegen des Mitnehmers entlang der jeweils zugeordneten Führungsschiene. Angetrieben durch die Antriebsvorrichtung kann somit die Fensterscheibe verstellt werden, beispielsweise um eine Fensteröffnung an einer Fahrzeugseitentür freizugeben oder zu schließen.

Eine solche Antriebsvorrichtung muss generell dazu ausgestaltet sein, ein hinreichend großes Drehmoment zum Verstellen der Fensterscheibe zur Verfügung zu stellen. Die Antriebsvorrichtung soll dabei einen kleinen Bauraum aufweisen können, soll einfach beispielsweise an einem zugeordneten Trägerelement, beispielsweise dem Aggregateträger eines Türmoduls, zu montieren sein und soll im Betrieb ein günstiges Betriebsverhalten bei geringer Geräuschentwicklung beispielsweise an einem Türmodul einer Fahrzeugtür aufweisen.

Bei einem aus der DE 10 2004 044 863 A1 bekannten Antrieb für eine Verstelleinrichtung in einem Kraftfahrzeug ist eine Seiltrommel auf einem Lagerdom eines Antriebsgehäuses angeordnet, wobei das Antriebsgehäuse über ein Befestigungselement in Form einer Schraube mit einem Trägerelement in Form eines Aggregateträgers verbunden ist.

Die KR 20130073580 A beschreibt eine Antriebsvorrichtung, bei der ein Seilausgangsgehäuse einstückig mit einem Trägerelement gebildet und mit einem Antriebsgehäuse zur Lagerung eines Antriebsrads verbunden ist. Zwischen Lagerdomen des Seilausgangsgehäuses einerseits und des Antriebsgehäuses andererseits wirkt ein Befestigungselement in Form einer Schraube.

Die WO 99/47779 A2 beschreibt einen Seilfensterheberantrieb zur Befestigung an einem Trägerblech, mit einer Motorachse zur Aufnahme einer Seiltrommel und eines Getriebeelements sowie zwei Lagerdeckeln, die beidseitig an dem Trägerblech angeordnet sind.

Die EP 1 231 350 A2 beschreibt eine Anordnung eines Fensterheberantriebs, bei dem Gehäuseteile beidseitig an ein Trägerelement angesetzt und über ein Befestigungselement in Form einer Schraube miteinander verbunden sind. Zwischen den Gehäuseteilen und dem Trägerelement wirkt hierbei ein zentrierender Eingriff zur Positionierung der Gehäuseteile am Trägerelement.

Die US 2006/105877 A1 beschreibt einen Fensterheberantrieb, der einen Sperrmechanismus unter Verwendung einer Schlingfeder aufweist.

Aufgabe der vorliegenden Erfindung ist es, eine Antriebsvorrichtung zur Verfügung zu stellen, die insbesondere einfach zu montieren ist und ein günstiges Betriebsverhalten im Betrieb aufweisen kann.

Diese Aufgabe wird durch einen Gegenstand mit den Merkmalen des Anspruchs 1 gelöst.

Demnach sind das Seilausgangsgehäuse und das Antriebsgehäuse über ein zwischen dem ersten Lagerelement und dem zweiten Lagerelement wirkendes Befestigungselement aneinander befestigt.

Das erste Lagerelement des Seilausgangsgehäuses, an dem die Seiltrommel drehbar gelagert ist, und das zweite Lagerelement des Antriebsgehäuses, an dem das Antriebsrad drehbar gelagert ist, können hierbei koaxial zueinander angeordnet sein derart, dass die erste Drehachse (des ersten Lagerelements) und die zweite Drehachse (des zweiten Lagerelements) miteinander fluchten.

Dadurch, dass das Seilausgangsgehäuse auf der ersten Seite des Trägerelements und das Antriebsgehäuse auf der anderen, zweiten Seite des Trägerelements über ein (einziges) Befestigungselement, das zwischen dem ersten Lagerelement und dem zweiten Lagerelement wirkt, aneinander befestigt und somit an dem Trägerelement festgelegt sind, ergibt sich eine sehr einfache Montage. Insbesondere kann zur Montage das Seilausgangsgehäuse einerseits und das Antriebsgehäuse andererseits an das Trägerelement angesetzt werden, um sodann das Seilausgangsgehäuse und das Antriebsgehäuse über das Befestigungselement, beispielsweise ein Schraubelement, miteinander zu verbinden, vorzugsweise axial zueinander zu verspannen.

Das Befestigungselement kann hierbei von einem der Lagerelemente in das andere der Lagerelemente eingreifen und die Lagerelemente dadurch miteinander verbinden. Über die Lagerelemente werden das Seilausgangsgehäuse einerseits und das Antriebsgehäuse andererseits somit zueinander festgelegt.

Die Seiltrommel ist, bei betriebsgemäßer Anordnung in einem Fahrzeug beispielsweise an einer Fahrzeugseitentür, z.B. in einem Nassraum angeordnet, während die Motoreinheit der Antriebsvorrichtung in einem Trockenraum gelegen ist. Die Trennung zwischen dem Nassraum und dem Trockenraum kann hierbei durch das Trägerelement, beispielsweise ein aus Kunststoff hergestellter Aggregateträger eines Türmoduls, bereitgestellt werden. Durch die Montage des Seilausgangsgehäuses einerseits des Trägerelements und das Antriebsgehäuse andererseits des Trägerelements und der Verbindung über ein (einziges) zentrales Befestigungselement kann auf einfache Weise eine solche Nass-Trockenraum-Trennung erhalten werden, ohne dass diese Nass-Trockenraum-Trennung durch von einer Seite zur anderen Seite greifende Befestigungselemente beeinträchtigt ist.

Das erste Lagerelement dient zur Lagerung der Seiltrommel und kann hierzu beispielsweise als zylindrischer Lagerdom, der von einem Boden des Seilausgangsgehäuses vorsteht, ausgebildet sein. Zudem kann das zweite Lagerelement des Antriebsgehäuses, das zum Lagern des Antriebsrads auf der von der Seiltrommel abgewandten Seite des Trägerelements dient, als zylindrischer Lagerdom an dem Antriebsgehäuse ausgebildet sein. Über das Befestigungselement werden die Lagerdome axial zueinander verspannt, sodass darüber das Seilausgangsgehäuse einerseits und das Antriebsgehäuse andererseits an dem Trägerelement festgelegt werden.

Um sicherzustellen, dass bei der Montage das erste Lagerelement des Seilausgangsgehäuses und das zweite Lagerelement des Antriebsgehäuses lagerichtig aneinander angesetzt werden, weist eines der Lagerelemente einen konischen Abschnitt (so genannter Zentrierkonus) auf, während das andere der Lagerelemente einen Zentriereingriff, der beispielsweise durch eine konische Öffnung ausgebildet sein kann, aufweist. Bei Ansetzen des Seilausgangsgehäuses einerseits an das Trägerelement und des Antriebsgehäuses andererseits an das Trägerelement gelangen der konische Abschnitt und der Zentriereingriff miteinander in Eingriff, sodass das erste Lagerelement des Seilausgangsgehäuses und das zweite Lagerelement des Antriebsgehäuses zueinander zentriert werden und sichergestellt ist, dass die erste Drehachse (des ersten Lagerelements des Seilausgangsgehäuses) und die zweite Drehachse (des zweiten Lagerelements des Antriebsgehäuse) koaxial zueinander ausgerichtet sind.

Der zentrierende Eingriff zwischen dem konischen Abschnitt einerseits und dem Zentriereingriff andererseits wird erst beim Verspannen während der Montage hergestellt.

So weisen in einer ersten Montagestellung, in der das Seilausgangsgehäuse und das Antriebsgehäuse an dem Trägerelement angeordnet, aber noch nicht über das Befestigungselement axial zueinander verspannt sind, der konische Abschnitt und der Zentriereingriff ein axiales Spiel zueinander auf. In der ersten Montagestellung sind der konische Abschnitt und der Zentriereingriff somit noch nicht unmittelbar in Anlage miteinander. Insbesondere sind konische Flächenabschnitte des konischen Abschnitts einerseits und des Zentriereingriffs andererseits noch nicht aufeinander aufgelaufen. Aufgrund des axialen Spiels sind das erste Lagerelement und das zweite Lagerelement (noch) nicht axial aneinander abgestützt.

In einer zweiten Montagestellung (die der betriebsgemäßen Funktionsposition entspricht), in der das Seilausgangsgehäuse und das Antriebsgehäuse über das Befestigungselement axial zueinander verspannt sind, sind dann jedoch der konische Abschnitt und der Zentriereingriff miteinander in Anlage. In der zweiten Montagestellung ist das Spiel zwischen dem ersten Lagerelement und dem zweiten Lagerelement aus der ersten Montagestellung somit aufgehoben. Dadurch, dass der konische Abschnitt und der Zentriereingriff miteinander in Anlage sind, sind das erste Lagerelement und das zweite Lagerelement zueinander zentriert, sodass sichergestellt ist, dass die erste Drehachse des ersten Lagerelements und die zweite Drehachse des zweiten Lagerelements in bestimmungsgemäßer Weise zueinander ausgerichtet sind.

Beim Verspannen des Seilausgangsgehäuses zu dem Antriebsgehäuse über das beispielsweise als Schraubelement ausgebildete Befestigungselement ist vorgesehen, dass sich das Seilausgangsgehäuse in einem oder in mehreren Bereichen elastisch verformt. Durch eine solche Verformbarkeit wird ein Spiel zwischen dem Seilausgangsgehäuse, dem Trägerelement und dem Antriebsgehäuse und auch ein Spiel in der Lagerung der Seiltrommel ausgeglichen.

Eine solche elastische Verformbarkeit kann durch gezielte Formgebung an Abschnitten des Seilausgangsgehäuses zur Verfügung gestellt werden. Beispielsweise kann eine solche elastische Verformbarkeit an dem Boden des Seilausgangsgehäuses vorgesehen sein, von dem das erste Lagerelement vorsteht. Der Boden ist hierbei beispielsweise über ein oder mehrere Gehäuseabschnitte, die radial zu dem ersten Lagerelement beabstandet sind, mit dem Trägerelement verbunden, sodass der Boden von dem Trägerelement abliegt und die Seiltrommel innerhalb des Seilausgangsgehäuses aufgenommen ist.

An dem Boden können beispielsweise ein oder mehrere Strukturelemente zur Versteifung des Bodens vorgesehen sein. So können an dem Boden Versteifungsrippen, die sich beispielsweise radial zur ersten Drehachse oder umfänglich um die erste Drehachse erstrecken, geformt sein. Um hierbei eine Sollverformungsstelle an dem Boden zu schaffen, können eine oder mehrere dieser Versteifungsrippen abschnittsweise unterbrochen sein, indem Aussparungen an den zugeordneten Versteifungsrippen vorgesehen sind, sodass an diesen Aussparungen eine Materialschwächung geschaffen wird, die ein (elastisches) Verformen des Bodens eben an dieser Stelle ermöglicht.

Die Versteifungsrippen sind vorzugsweise achssymmetrisch zur ersten Drehachse, indem sie radial zur und/oder umfänglich um die erste Drehachse erstreckt sind. Ebenso sind die Aussparungen vorzugsweise achssymmetrisch zur ersten Drehachse, indem sie beispielsweise entlang eines Kreises um die erste Drehachse angeordnet sind.

Durch die mit den Aussparungen geschaffene Sollverformungsstelle (die beispielsweise einer Sollverformungslinie um die erste Drehachse entspricht) kann das axiale Spiel zwischen den Lagerelementen beim Verspannen des Seilausgangsgehäuses zum Antriebsgehäuse elastisch ausgeglichen werden kann.

Zudem kann beispielsweise auch ein Fußabschnitt des zumindest einen Gehäuseabschnitts elastisch verformbar sein, sodass bei Verspannen des Seilausgangsgehäuses mit dem Antriebsgehäuse über das Befestigungselement ein Spiel auch durch eine elastische Verformung an einem solchen Fußabschnitt ausgeglichen werden kann.

Über das Befestigungselement, das zwischen dem ersten Lagerelement des Seilausgangsgehäuses und dem zweiten Lagerelement des Antriebsgehäuses wirkt, werden das Seilausgangsgehäuse und das Antriebsgehäuse - unter Zwischenlage des Trägerelements - axial zueinander festgelegt und durch Verspannen zueinander an dem Trägerelement befestigt. Über die an dem ersten Lagerelement gelagerte Seiltrommel können hierbei Drehmomente auf das Seilausgangsgehäuse wirken, während über das an dem zweiten Lagerelement gelagerte Antriebsrad auch Drehmomente an dem Antriebsgehäuse anliegen können. Es ist somit zu gewährleisten, dass das Seilausgangsgehäuse genauso wie das Antriebsgehäuse sich im Betrieb der Antriebsvorrichtung nicht rotatorisch zu dem Trägerelement und zueinander bewegen können. Es ist somit eine Drehsicherung zwischen dem Seilausgangsgehäuse und dem Trägerelement einerseits und dem Antriebsgehäuse und dem Trägerelement andererseits vorzusehen.

Hierzu kann beispielsweise der zumindest eine Gehäuseabschnitt, über den der Boden des Seilausgangsgehäuses mit dem Trägerelement verbunden ist, drehfest an dem Trägerelement festgelegt sein. So kann an einem Fußabschnitt des zumindest einen Gehäuseabschnitts oder dem Trägerelement ein Formschlusselement vorgesehen sein, das bei montiertem Seilausgangsgehäuse mit einer Formschlussöffnung an dem jeweils anderen Bauteil (also dem Trägerelement oder dem Fußabschnitt des zumindest einen Gehäuseabschnitts) in Eingriff steht. Über den Eingriff des Formschlusselements in die Formschlussöffnung wird somit eine Drehsicherung zwischen dem Seilausgangsgehäuse und dem Trägerelement bereitgestellt. Dadurch, dass der zumindest eine Gehäuseabschnitt radial zu dem ersten Lagerelement beabstandet ist und somit radial außerhalb der ersten Drehachse, um die die Seiltrommel drehbar ist, wirkt, können Drehmomente in günstiger Weise aufgefangen werden.

Über den zumindest einen Gehäuseabschnitt ist das Seilausgangsgehäuse hierbei axial an dem Trägerelement abgestützt und - durch axiales Verspannen des Seilausgangsgehäuses mit dem Antriebsgehäuse - auch gegenüber dem Trägerelement verspannt. Die Spannkraft des Befestigungselements wird über den zumindest einen Gehäuseabschnitt an dem Trägerelement abgestützt.

Zusätzlich kann das Antriebsgehäuse zumindest eine radial zum zweiten Lagerelement beabstandete Befestigungseinrichtung, beispielsweise eine Befestigungsbuchse mit einer eingeformten Formschlussöffnung, aufweisen. Über die Befestigungseinrichtung kann auch das Antriebsgehäuse in drehfester Weise an dem Trägerelement festgelegt sein, sodass um die durch das zweite Lagerelement definierte zweite Drehachse wirkende Drehmomente aufgefangen und abgeleitet werden können und insbesondere nicht zu einem Verdrehen des Antriebsgehäuses an dem Trägerelement führen können.

Zur Drehsicherung des Antriebsgehäuses an dem Trägerelement greift vorzugsweise ein Formschlusselement, das an dem Trägerelement oder der Befestigungseinrichtung des Antriebsgehäuses angeordnet ist, in eine Formschlussöffnung, die an dem jeweils anderen Bauteil (also der Befestigungseinrichtung des Antriebsgehäuses oder dem Trägerelement) gebildet ist, formschlüssig ein. Über den formschlüssigen Eingriff können Drehmomente aufgefangen und abgeleitet werden, sodass das Antriebsgehäuse in drehfester Weise an dem Trägerelement festgelegt ist.

Es können somit sowohl das Seilausgangsgehäuse als auch das Antriebsgehäuse in formschlüssiger Weise drehfest an dem Trägerelement gesichert sein. Dieser Formschluss wird bei Ansetzen des Seilausgangsgehäuses an die erste Seite des Trägerelements und bei Ansetzen des Antriebsgehäuses an die zweite Seite des Trägerelements selbsttätig hergestellt, ohne dass hierzu gesonderte Montageschritte erforderlich sind und weitere Befestigungselemente, beispielsweise in Form von Schraubelementen, angebracht werden müssen. Das (axiale) Festlegen des Seilausgangsgehäuses und des Antriebsgehäuses zueinander erfolgt vorzugsweise allein über das zentral zwischen den Lagerelementen des Seilausgangsgehäuses und des Antriebsgehäuses wirkende Befestigungselement.

An den Formschlusselementen können Dämpfungselemente angeordnet sein, die eine elastische, dämpfende Zwischenlage zwischen den Formschlusselementen und den Wandungen der Formschlussöffnungen bilden. Auf diese Weise kann eine akustische Entkopplung im Betrieb zwischen dem Antriebsgehäuse und dem Trägerelement erreicht werden.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Antriebsvorrichtung;
- Fig. 1B: die Explosionsansicht gemäß Fig. 1A, aus anderer Perspektive;
- Fig. 2: eine Ansicht eines Seilausgangsgehäuses vor Ansetzen an ein Trägerelement;
- Fig. 3: eine andere Ansicht des Seilausgangsgehäuses vor Ansetzen an das Trägerelement;
- Fig. 4A: eine Ansicht des Seilausgangsgehäuses an dem Trägerelement;
- Fig. 4B: eine ausschnittsweise vergrößerte Ansicht der Anordnung gemäß Fig. 4A;
- Fig. 5: eine gesonderte Ansicht des Seilausgangsgehäuses, schräg von unten;
- Fig. 6: eine Draufsicht auf das Seilausgangsgehäuse;
- Fig. 7: eine Querschnittansicht entlang der Linie A-A gemäß Fig. 6;
- Fig. 8: die Querschnittansicht gemäß Fig. 7, bei an das Trägerelement angesetztem Seilausgangsgehäuse;
- Fig. 9: eine Querschnittansicht entlang der Linie B-B gemäß Fig. 4A, vor Verspannen des Seilausgangsgehäuses mit einem Antriebsgehäuse über ein Befestigungselement;
- Fig. 10A: eine Ansicht eines weiteren Ausführungsbeispiels einer Antriebsvorrichtung, in einer Querschnittsansicht;
- Fig. 10B: eine vergrößerte Ansicht in einem ersten Ausschnitt gemäß Fig. 10A;
- Fig. 10C: eine vergrößerte Ansicht in einem zweiten Ausschnitt gemäß Fig. 10A;
- Fig. 10D: eine vergrößerte Ansicht in einem dritten Ausschnitt gemäß Fig. 10A;
- Fig. 11A: das Ausführungsbeispiel gemäß Fig. 10A, in einem verspannten Zustand;
- Fig. 11B: eine vergrößerte Ansicht der Anordnung gemäß Fig. 11A in dem ersten Ausschnitt;
- Fig. 11C: eine vergrößerte Ansicht der Anordnung gemäß Fig. 11A in dem zweiten Ausschnitt;
- Fig. 11D: eine vergrößerte Ansicht der Anordnung gemäß Fig. 11A in dem dritten Ausschnitt; und
- Fig. 12: eine schematische Ansicht einer Verstelleinrichtung eines Fahrzeugs in Form eines Fensterhebers.

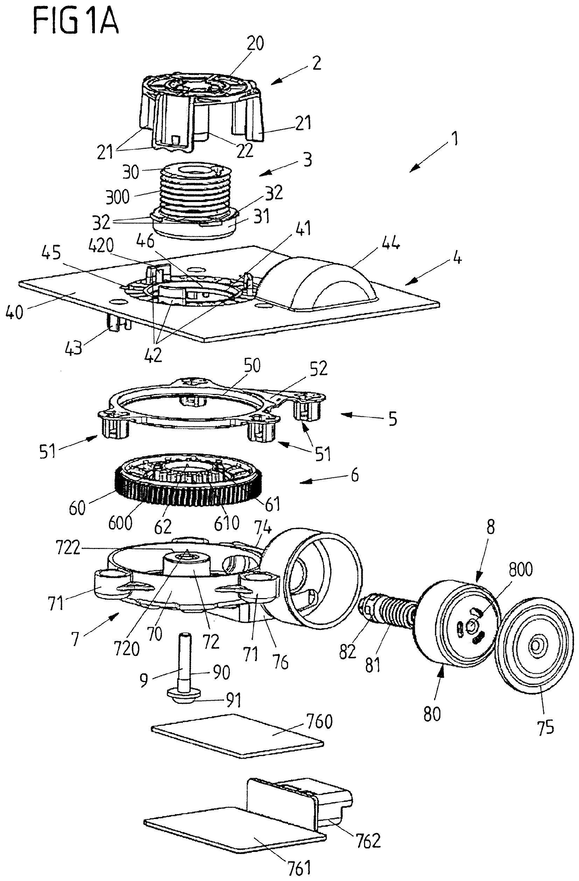

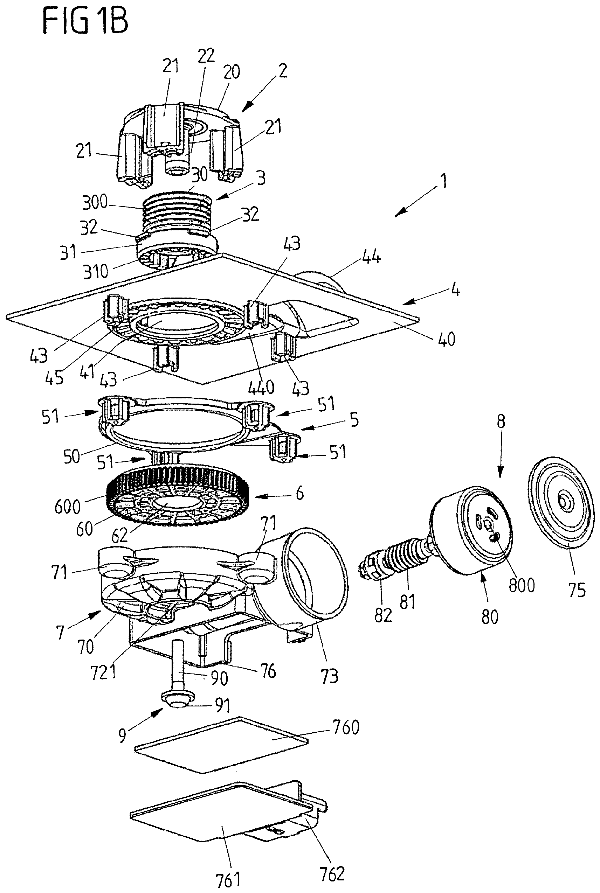

Fig. 1A, 1B bis 9 zeigen ein erstes Ausführungsbeispiel einer Antriebsvorrichtung 1, die beispielsweise als Antrieb in einer Verstelleinrichtung zum Verstellen einer Fensterscheibe beispielsweise einer Fahrzeugseitentür Verwendung finden kann.

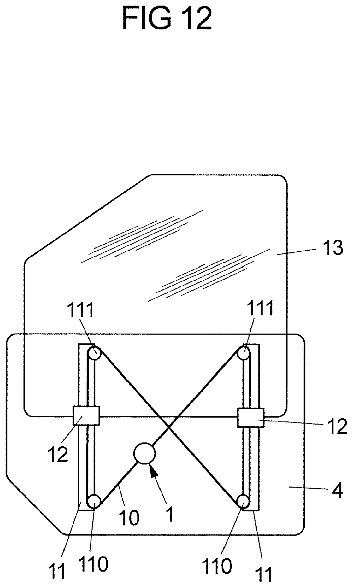

Eine solche Verstelleinrichtung in Form eines Fensterhebers, beispielhaft dargestellt in Fig. 12, weist beispielsweise ein Paar von Führungsschienen 11 auf, an denen jeweils ein Mitnehmer 12, der mit einer Fensterscheibe 13 gekoppelt ist, verstellbar ist. Jeder Mitnehmer 12 ist über ein Zugseil 10, das zur Übertragung von (ausschließlich) Zugkräften ausgebildet ist, mit einer Antriebsvorrichtung 1 gekoppelt, wobei das Zugseil 10 eine geschlossene Seilschlaufe ausbildet und dazu mit seinen Enden mit einer Seiltrommel 3 (siehe zum Beispiel Fig. 1A und 1B) der Antriebsvorrichtung 1 verbunden ist. Das Zugseil 10 erstreckt sich von der Antriebsvorrichtung 1 um Umlenkrollen 110 an den unteren Enden der Führungsschienen 11 hin zu den Mitnehmern 12 und von den Mitnehmern 12 um Umlenkrollen 111 an den oberen Enden der Führungsschienen 11 zurück zur Antriebsvorrichtung 10.

Im Betrieb treibt eine Motoreinheit der Antriebsvorrichtung 1 die Seiltrommel 3 derart an, dass das Zugseil 10 mit einem Ende auf die Seiltrommel 3 aufgewickelt und mit dem anderen Ende von der Seiltrommel 3 abgewickelt wird. Hierdurch verschiebt sich die durch das Zugseil 10 gebildete Seilschlaufe ohne Änderung der frei erstreckten Seillänge, was dazu führt, dass die Mitnehmer 12 an den Führungsschienen 11 gleichgerichtet bewegt und dadurch die Fensterscheibe 13 entlang der Führungsschienen 11 verstellt wird.

Der Fensterheber ist bei dem Ausführungsbeispiel gemäß Fig. 12 an einem Aggregateträger 4 eines Türmoduls angeordnet. Der Aggregateträger 4 kann beispielsweise an einem Türinnenblech einer Fahrzeugtür festzulegen sein und stellt eine vormontierte Einheit dar, die vormontiert mit an dem Aggregateträger 4 angeordnetem Fensterheber an der Fahrzeugtür montiert werden kann.

Die Antriebsvorrichtung 1 des Ausführungsbeispiels gemäß Fig. 1A, 1B bis 9 ist an einem Flächenabschnitt 40 eines z.B. durch einen Aggregateträger verwirklichten Trägerelements 4 angeordnet und weist ein an einer ersten Seite des Trägerelements 4 angeordnetes Seilausgangsgehäuse 2 und ein an einer von der ersten Seite abgewandten, zweiten Seite des Trägerelements 4 angeordnetes Antriebsgehäuse 7 auf. Das Seilausgangsgehäuse 2 dient dazu, die Seiltrommel 3 an dem Trägerelement 4 zu lagern, während das Antriebsgehäuse 7 unter anderem ein Antriebsrad 6 einfasst, das über eine Motoreinheit 8 angetrieben werden kann und mit der Seiltrommel 3 in Verbindung steht, sodass durch Verdrehen des Antriebsrads 6 die Seiltrommel 3 angetrieben werden kann.

Die Seiltrommel 3 ist an der ersten Seite des Trägerelements 4, bei bestimmungsgemäßer Anordnung beispielsweise an einer Fahrzeugtür eines Fahrzeugs, in einem Nassraum der Fahrzeugtür angeordnet. Das Antriebsgehäuse 7 befindet sich demgegenüber im Trockenraum der Fahrzeugtür. Die Trennung zwischen Nassraum und Trockenraum wird durch das Trägerelement 4 hergestellt, und entsprechend ist die Schnittstelle zwischen dem Antriebsrad 6 und der Seiltrommel 3 feuchtigkeitsdicht abzudichten, sodass keine Feuchtigkeit von dem Nassraum in den Trockenraum gelangen kann.

Das Seilausgangsgehäuse 2 weist einen Boden 20, ein zentral von dem Boden 20 vorstehendes, zylindrisches Lagerelement 22 in Form eines Lagerdoms und radial zu dem Lagerelement 22 beabstandete Gehäuseabschnitte 21 in Form von parallel zu dem zylindrischen Lagerelement 22 erstreckten Gehäusestegen auf. An dem Lagerelement 22 ist die Seiltrommel 3 drehbar gelagert und dabei derart von dem Seilausgangsgehäuse 2 eingefasst, dass die Seiltrommel 3 an dem Trägerelement 4 gehalten ist.

Die Seiltrommel 3 weist einen Körper 30 und, an der umfänglichen Mantelfläche des Körpers 30, eine in den Körper 30 eingeformte Seilrille 300 zur Aufnahme des Zugseils 10 auf. Mit einem Hohlrad 31 ist die Seiltrommel 3 in eine Öffnung 41 des Trägerelements 4 eingesetzt und mit dem Antriebsrad 6 drehfest verbunden, sodass eine Drehbewegung des Antriebsrads 6 zu einer Drehbewegung der Seiltrommel 3 führt.

Das Antriebsgehäuse 7 ist unter Zwischenlage eines Dichtelements 5 an die andere, zweite Seite des Trägerelements 4 angesetzt und weist einen Gehäusetopf 70 mit einem zentral darin ausgebildeten Lagerelement 72 in Form eines zylindrischen Lagerdoms auf, das eine Öffnung 62 des Antriebsrads 6 durchgreift und das Antriebsrad 6 auf diese Weise drehbar lagert. An den Gehäusetopf 70 schließt ein Schneckengehäuse 74 an, in dem eine Antriebsschnecke 81 einliegt, die drehfest mit einer Antriebswelle 800 eines Elektromotors 80 der Motoreinheit 8 verbunden ist und über eine Schneckenverzahnung mit einer Außenverzahnung 600 eines Körpers 60 des Antriebsrads 6 in Verzahnungseingriff steht. Die Antriebswelle 800 ist über ein Lager 82 an ihrem dem Elektromotor 80 abgewandten Ende in dem Schneckengehäuse 74 gelagert. Der Elektromotor 80 liegt hierbei in einem Motortopf 73 des Antriebsgehäuses 7 ein, der über einen Gehäusedeckel 75 nach außen hin verschlossen ist.

Das Antriebsgehäuse 7 weist zudem ein Elektronikgehäuse 76 auf, in dem eine Platine 760 mit einer darauf angeordneten Steuerelektronik eingefasst ist. Das Elektronikgehäuse 76 ist nach außen hin über eine Gehäuseplatte 761 mit einem daran angeordneten Steckverbinder 762 zur elektrischen Anbindung der Elektronik der Platine 760 verschlossen.

Das Antriebsrad 6 weist, axial von dem Körper 60 vorstehend, ein Verbindungsrad 61 mit einer daran geformten Außenverzahnung 610 auf, das mit dem Hohlrad 31 der Seiltrommel 3 derart in Eingriff steht, dass eine Innenverzahnung 310 des Hohlrads 31 (siehe zum Beispiel Fig. 1B) in Verzahnungseingriff mit der Außenverzahnung 610 des Verbindungsrads 61 steht. Auf diese Weise sind das Antriebsrad 6 und die Seiltrommel 3 drehfest miteinander verbunden, sodass die Seiltrommel 3 durch Antreiben des Antriebsrads 6 an dem Trägerelement 4 verdrehbar ist.

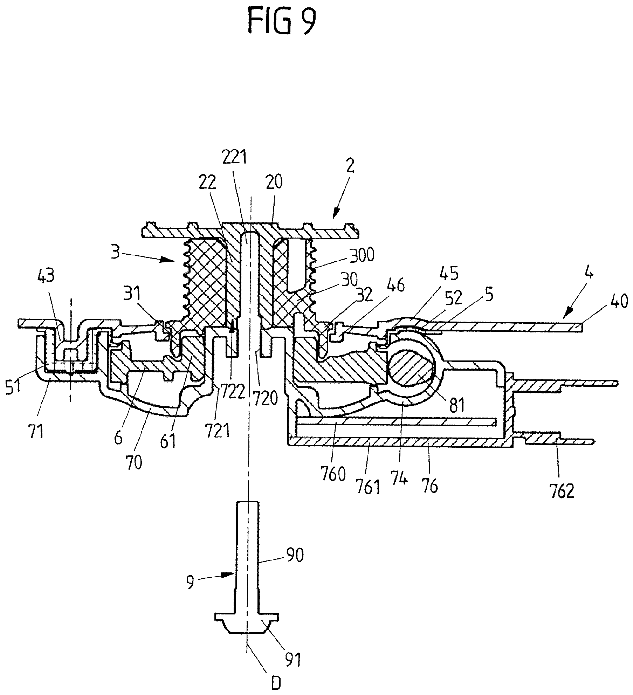

Zur Montage der Antriebsvorrichtung 1 wird das Seilausgangsgehäuse 2 einerseits an das Trägerelement 4 und das Antriebsgehäuse 7 andererseits an das Trägerelement 4 angesetzt. Die Befestigung an dem Trägerelement 4 erfolgt dann dadurch, dass ein Befestigungselement 9 in Form eines Schraubelements in eine Eingriffsöffnung 721 unterseitig des Antriebsgehäuses 7 eingesetzt wird derart, dass sich das Befestigungselement 9 durch eine Öffnung 720 in dem Lagerelement 72 des Antriebsgehäuses 7 hindurch erstreckt (siehe Fig. 9) und zentral in eine Öffnung 221 innerhalb des Lagerelements 22 des Seilausgangsgehäuses 2 eingreift. Über das Befestigungselement 9 werden das Seilausgangsgehäuse 2 und das Antriebsgehäuse 7 axial an den Lagerelementen 22, 72 zueinander verspannt und darüber an dem Trägerelement 4 festgelegt.

Innerhalb der Öffnung 221 des Lagerelements 22 des Seilausgangsgehäuses 2 kann ein Gewinde zum Aufnehmen des Befestigungselements 9 geformt sein. Denkbar und möglich ist aber auch, dass das Befestigungselement 9 selbstschneidend in die Öffnung 221 eingeschraubt wird.

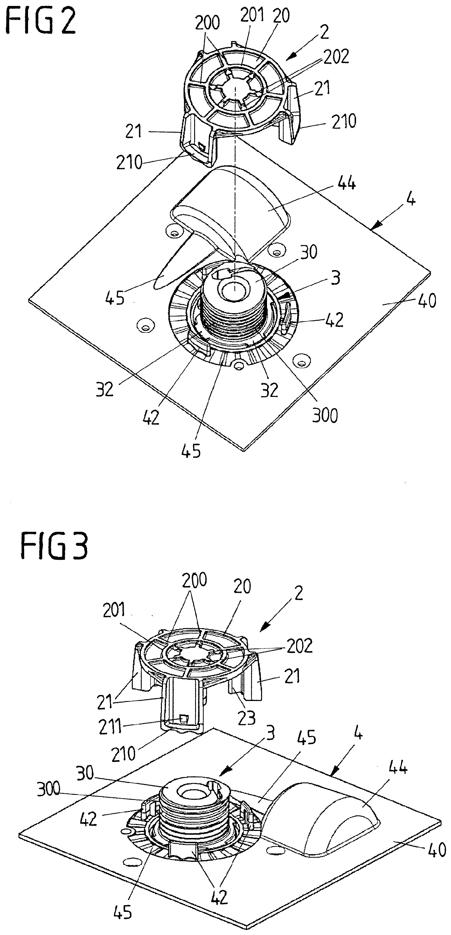

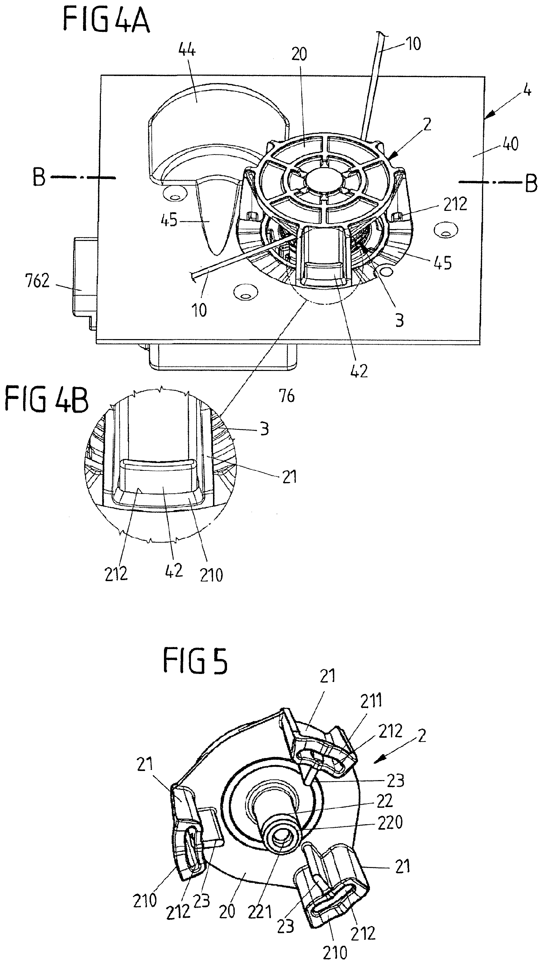

Zur Montage wird das Seilausgangsgehäuse 2 an die erste Seite des Trägerelements 4 angesetzt, sodass das Seilausgangsgehäuse 2 die Seiltrommel 3 einfasst und an dem Trägerelement 4 hält, wie dies in Fig. 2 bis 4A, 4B dargestellt ist. Das Seilausgangsgehäuse 2 kommt hierbei mit seinen radial zum Lagerelement 22 beabstandeten Gehäuseabschnitten 21 über Fußabschnitte 210 in Anlage mit einem Anlagering 45, der eine Öffnung 41 in dem Trägerelement 4 umfänglich umgibt. An dem Anlagering 45 sind axial vorstehende Formschlusselemente 42 in Form von stegförmigen Zapfen ausgebildet, die bei Ansetzen des Seilausgangsgehäuses 2 an das Trägerelement 4 mit Formschlussöffnungen 212 (siehe Fig. 4B) an den Fußabschnitten 210 der Gehäuseabschnitte 21 in Eingriff gelangen und auf diese Weise eine Drehsicherung um die durch das Lagerelement 22 definierte Drehachse D zwischen dem Seilausgangsgehäuse 2 und dem Trägerelement 4 schaffen.

Die stegförmigen Formschlusselemente 42 können an ihren seitlichen Kanten - betrachtet entlang der Umfangsrichtung um das Lagerelement - (unter kleinem Winkel) schräg erstreckt sein, so dass bei Aufstecken der Fußabschnitte 210 auf die Formschlusselemente 42 die Gehäuseabschnitte 21 entlang der Umfangsrichtung spielfrei an den Formschlusselementen 42 festgelegt werden.

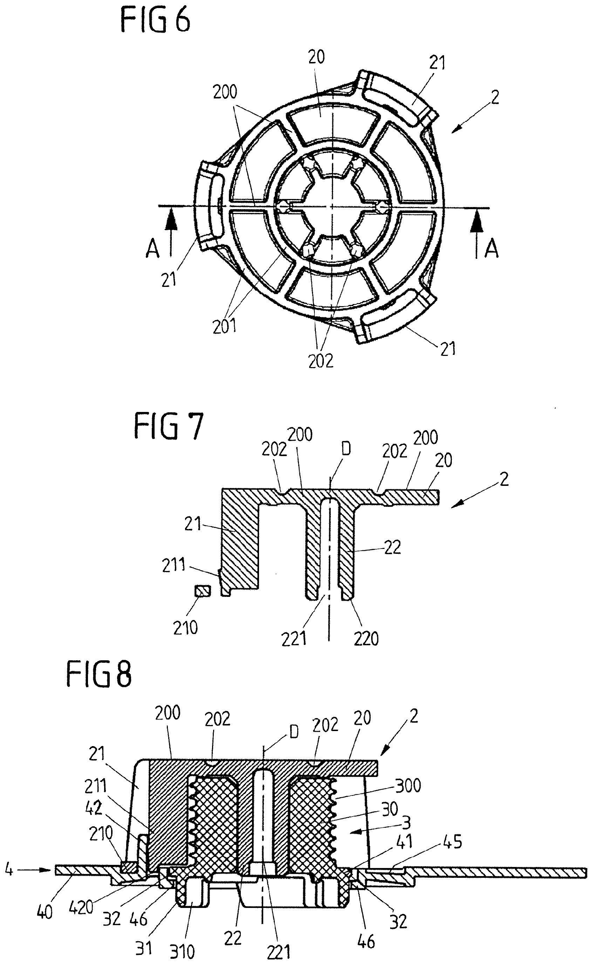

Innenseitig der Formschlusselemente 42 sind Rastausnehmungen 420 geschaffen (siehe zum Beispiel Fig. 1A), in die bei angesetztem Seilausgangsgehäuse 2 Rastelemente 211 in Form von nach außen vorstehenden Rastnasen an den Gehäuseabschnitten 21 eingreifen, wie dies beispielsweise aus einer Zusammenschau von Fig. 6 bis 8 ersichtlich ist. Über diese Rastverbindung wird in einer Vormontagestellung das Seilausgangsgehäuse 2 zusammen mit der darin eingefassten Seiltrommel 3 an dem Trägerelement 4 gehalten, auch wenn das Antriebsgehäuse 7 noch nicht über das Befestigungselement 9 mit dem Seilausgangsgehäuse 2 verspannt ist. Die Rastverbindung vereinfacht somit die Montage und verhindert ein Abfallen des Seilausgangsgehäuses 2 bei noch nicht montiertem Antriebsgehäuse 7.

Die Seiltrommel 3 kommt, in der Vormontagestellung, über radial vorstehende Auflageelemente 32 am oberen Rand des Hohlrads 31 (siehe zum Beispiel Fig. 1A) mit einem Auflagering 46 innerhalb der Öffnung 41 des Trägerelements 4 in Auflage (siehe zum Beispiel Fig. 8), sodass die Seiltrommel 3 in der Vormontagestellung nicht durch die Öffnung 41 hindurchrutschen kann und über das Seilausgangsgehäuse 2 an dem Trägerelement 4 gehalten ist.

Die Auflageelemente 32 dienen insbesondere zur Sicherung der Lage der Seiltrommel 3 an dem Trägerelement 4 in der Vormontagestellung. Nach vollständiger Montage der Antriebsvorrichtung 1 steht die Seiltrommel 3 über das Hohlrad 31 mit dem Antriebsrad 6 in Verbindung und ist axial zwischen dem Seilausgangsgehäuse 2 und dem Antriebsgehäuse 7 festgelegt.

An den Innenseiten der Gehäuseabschnitte 21 sind axial erstreckte und radial nach innen vorspringende Sicherungselemente 23 angeordnet, die der Seilrille 300 an der Mantelfläche des Körpers 30 zugewandt sind und vorzugsweise im Betrieb entlang dieser Mantelfläche gleiten. Über diese Sicherungselemente 23 wird sichergestellt, dass das in der Seilrille 300 aufgenommene Zugseil 10 nicht aus der Seilrille 300 herausspringen kann.

Das Antriebsgehäuse 7 wird an die andere, zweite Seite des Trägerelements 4 angesetzt derart, dass der Motortopf 73 in einer Ausformung 44 in dem Flächenabschnitt 40 und das Schneckengehäuse 74 in einer daran anschließenden Ausformung 440 in dem Flächenabschnitt 40 zu liegen kommt (siehe Fig. 1A, 1B und 2). Bei Ansetzen des Antriebsgehäuses 7 gelangen Befestigungseinrichtungen 71 in Form von Eingriffsbuchsen mit darin eingeformten Formschlussöffnungen 710 mit unterseitig von dem Trägerelement 4 vorstehenden Formschlusselementen 43 in Form von Zapfen in Eingriff. Dadurch, dass die Formschlussöffnungen 710 der Befestigungseinrichtungen 71 genauso wie die Formschlusselemente 43 in Form der Zapfen an dem Trägerelement 4 radial zu der durch das Lagerelement 72 des Antriebsgehäuses 7 geschaffenen Drehachse D beabstandet sind, wird durch diesen formschlüssigen Eingriff das Antriebsgehäuse drehfest an dem Trägerelement 4 festgelegt, sodass eine Drehsicherung für das Antriebsgehäuse 7 bereitgestellt wird.

An den Formschlusselementen 43 des Trägerelements 4 sind Eingriffsabschnitte 51 an einem Dichtring 50 des Dichtelements 5 angeordnet, sodass der formschlüssige Eingriff der Formschlusselemente 43 mit den Formschlussöffnungen 710 an den Befestigungseinrichtungen 71 unter Zwischenlage der Eingriffsabschnitte 51 erfolgt. Dies dient der akustischen Entkopplung.

An dem Dichtelement 5 ist ein gekrümmter Abschnitt 52 ausgebildet, der im Bereich der Ausformung 440 zur Aufnahme des Schneckengehäuses 74 zu liegen kommt. Der gekrümmte Abschnitt 52 bildet eine Zwischenlage zwischen dem Schneckengehäuse 74 und dem Trägerelement 4, sodass auch darüber eine akustische Entkopplung des Antriebsgehäuses 7 von dem Trägerelement 4 erreicht wird.

Ist das Antriebsgehäuse 7 unter Zwischenlage des Dichtelements 5 an das Trägerelement 4 angesetzt worden, so wird das Antriebsgehäuse 7 über das Befestigungselement 9 mit dem Seilausgangsgehäuse 2 verspannt, sodass darüber das Seilausgangsgehäuse 2 und das Antriebsgehäuse 7 zueinander und an dem Trägerelement 4 festgelegt werden. Wie in Fig. 9 dargestellt, wird das Befestigungselement 9 in die Eingriffsöffnung 721 innerhalb des Lagerelements 72 des Antriebsgehäuses 7 eingesetzt, sodass das Befestigungselement 9 mit einem Schaft 90 die Öffnung 720 am Kopf des Lagerelements 72 durchgreift und in die Öffnung 221 des Lagerelements 22 des Seilausgangsgehäuses 2 eingreift. Ein Kopf 91 des Befestigungselements 9 kommt hierbei an der dem Lagerelement 22 abgewandten Seite der Öffnung 720 zu liegen, sodass durch Einschrauben des Befestigungselements 9 in die Öffnung 221 innerhalb des Lagerelements 22 das Seilausgangsgehäuse 2 zu dem Antriebsgehäuse 7 verspannt wird.

Das Seilausgangsgehäuse 2 weist, wie beispielsweise aus Fig. 2 und 6 ersichtlich ist, an seinem Boden 20 an der dem Trägerelement 4 abgewandten Seite Strukturelemente 200, 201 in Form von Versteifungsrippen auf, die sich radial zu der durch das Lagerelement 22 geschaffenen Drehachse D bzw. umfänglich um die Drehachse D erstrecken und den Boden 20 versteifen. In den radial erstreckten Strukturelementen 200 sind hierbei lokal Aussparungen 202 zur Materialschwächung an den Strukturelementen 200 geschaffen, die entlang eines Rings um die Drehachse D angeordnet sind und eine Sollverformungslinie zur elastischen Verformung des Bodens 20 schaffen.

Wird das Befestigungselement 9 von Seiten des Antriebsgehäuses 7 in das Lagerelement 22 eingeschraubt, so kann sich der Boden 20 zumindest geringfügig verformen, sodass herstellungsbedingte Toleranzen ausgeglichen werden können und das Seilausgangsgehäuse 2 über die Fußabschnitte 210 an den Gehäuseabschnitten 21 spielfrei an dem Trägerelement 4 festgelegt wird.

An einem dem Boden 20 abgewandten Ende weist das Lagerelement 22 zudem einen konischen Abschnitt 220 in Form eines Zentrierkonus auf (siehe Fig. 8 und 9), der bei Verspannen des Seilausgangsgehäuses 2 zu dem Antriebsgehäuse 7 mit einem komplementär geformten Zentriereingriff an dem Lagerelement 72 des Antriebsgehäuses 7 in Eingriff gelangt und auf diese Weise eine zentrierte Lage des Lagerelements 22 des Seilausgangsgehäuses 2 zu dem Lagerelement 72 des Antriebsgehäuses 7 einstellt. Sowohl der konische Abschnitt 220 am Ende des Lagerelements 22 als auch der Zentriereingriff 722 am Kopf des Lagerelements 72 sind konisch geformt und dabei komplementär zueinander (der konische Abschnitt 220 verwirklicht einen Außenkonus, während der Zentriereingriff 722 einen Innenkonus darstellt), sodass bei einem Eingriff das Lagerelement 22 des Seilausgangsgehäuses 2 in zentrierter Weise zu dem Lagerelement 72 des Antriebsgehäuses 7 ausgerichtet wird.

Das Lagerelement 22 des Seilausgangsgehäuses 2 und das Lagerelement 72 des Antriebsgehäuses 7 schaffen hierbei eine gemeinsame Drehachse D für die Seiltrommel 3 einerseits und das Antriebsrad 6 andererseits, sodass die Seiltrommel 3 und das Antriebsrad 6 sich im Betrieb koaxial zueinander und gemeinsam miteinander verdrehen können.

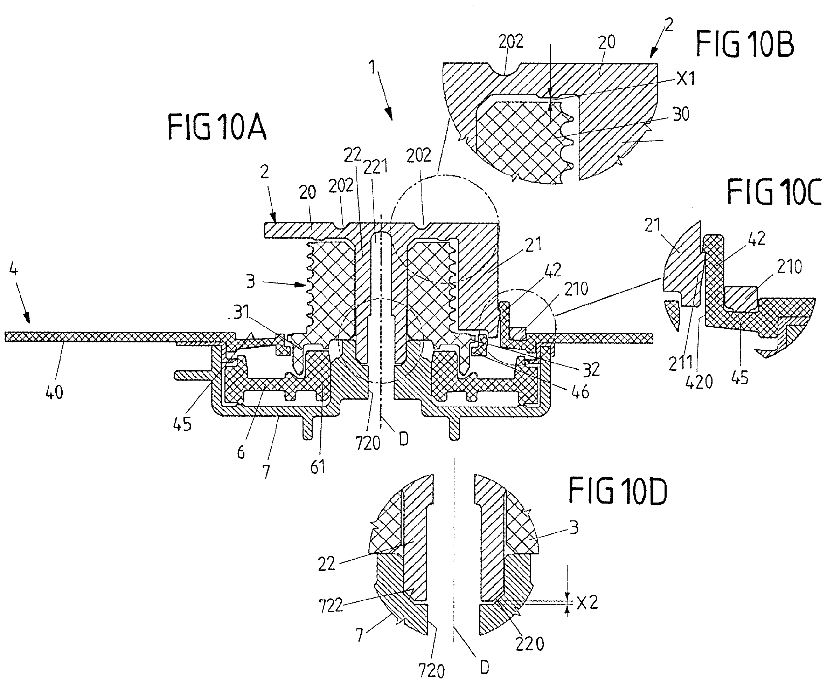

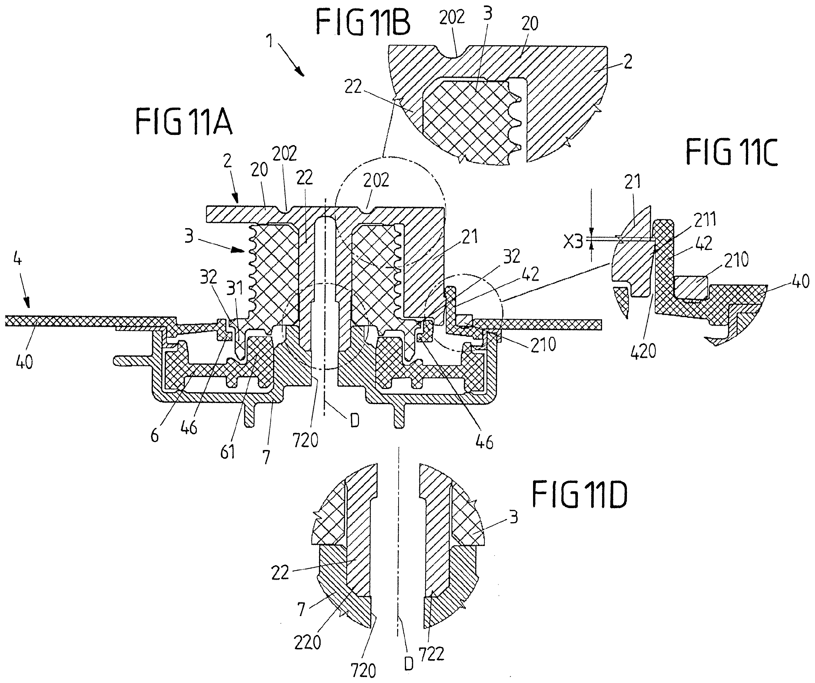

Bei einem in Fig. 10A bis 10D und 11A bis 11D dargestellten Ausführungsbeispiel ist, gegenüber dem vorangehend anhand von Fig. 1A, 1B bis 9 beschriebenen Ausführungsbeispiel, das Lagerelement 22 verlängert und greift mit seinem Ende in das Lagerelement 72 des Antriebsgehäuses 7 ein, wie dies zum Beispiel aus Fig. 10A und der vergrößerten Ansicht gemäß Fig. 10D ersichtlich ist.

Fig. 10A bis 10D zeigen hierbei die Antriebsvorrichtung 1 in einer ersten Montagestellung, bei der das Seilausgangsgehäuse 2 einerseits und das Antriebsgehäuse 7 andererseits an das Trägerelement 4 angesetzt, aber noch nicht über das Befestigungselement 9 miteinander verspannt sind. In dieser ersten Montagestellung liegt das Seilausgangsgehäuse 2 über seine Fußabschnitte 210 der Gehäuseabschnitte 21 an dem Anlagering 45 des Trägerelements 4 an (siehe die vergrößerte Ansicht gemäß Fig. 10C), wobei ein Spiel X1 zwischen der Seiltrommel 3 und dem Boden 20 (siehe die vergrößerte Ansicht gemäß Fig. 10B) und zudem auch ein Spiel X2 zwischen dem konischen Abschnitt 220 am Ende des Lagerelements 22 und dem Zentriereingriff 722 an dem Lagerelement 72 (siehe die vergrößerte Ansicht gemäß Fig. 10D) besteht.

Wird nunmehr das Seilausgangsgehäuse 2 über das Befestigungselement 9 zu dem Antriebsgehäuse 7 axial verspannt, so wird dadurch das Lagerelement 22 weiter in das Lagerelement 72 eingezogen und dadurch das Spiel X2 zwischen dem konischen Abschnitt 220 des Lagerelements 22 und dem Zentriereingriff 722 des Lagerelements 72 aufgehoben, wie dies aus der vergrößerten Ansicht gemäß Fig. 11B ersichtlich ist. Dies erfolgt unter (geringfügiger) Verformung des Bodens 20 des Seilausgangsgehäuses 2 insbesondere an den Sollverformungsstellen 202, wobei sich auch die Fußabschnitte 210 (geringfügig) verformen und dadurch ein Spiel X3 zwischen dem Rastelement 211 eines jeden Gehäuseabschnitts 21 und der Rastausnehmung 420 des jeweils zugeordneten Formschlusselements 42 in axialer Richtung eingestellt wird (Fig. 11C). Zudem wird das Spiel X1 zwischen dem Boden 20 und der Seiltrommel 3 weitestgehend aufgehoben (siehe Fig. 11B), sodass die Seiltrommel 3 axial im Wesentlichen spielfrei zwischen dem Seilausgangsgehäuse 2 und dem Lagerelement 72 das Antriebsgehäuse 7 gehalten ist, dabei aber in leichtgängiger Weise an dem Lagerelement 22 verdrehbar ist.

Ansonsten ist das Ausführungsbeispiel gemäß Fig. 10A bis 10D und 11A bis 11D funktional identisch dem Ausführungsbeispiel gemäß Fig. 1A, 1B bis 9, sodass auch auf das vorangehend Ausgeführte verwiesen werden soll.

Eine Spielfreimachung wie bei dem Ausführungsbeispiel gemäß Fig. 10A bis 10D und 11A bis 11D durch Verspannen des Seilausgangsgehäuses 2 zu dem Antriebsgehäuse 7 kann auch bei dem Ausführungsbeispiel gemäß Fig. 1A, 1B bis 9 vorgesehen sein, sodass die Ausführungsbeispiele auch insofern funktional identisch sein können.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

Eine Antriebsvorrichtung der beschriebenen Art ist insbesondere nicht beschränkt auf den Einsatz an einem Fensterheber, sondern kann auch zum Verstellen eines anderen Verstellelements, beispielsweise eines Schiebedachs oder dergleichen, in einem Fahrzeug dienen.

Die Antriebsvorrichtung kann in einfacher Weise insbesondere unter Verwendung eines (einzigen) axial verspannenden Befestigungselements montiert werden. Es ergibt sich eine Montage in wenigen Montageschritten, die einfach und günstig bei zuverlässiger Festlegung des Seilausgangsgehäuses und des Antriebsgehäuses an dem Trägerelement sein kann.

### Bezugszeichenliste

- 1: Antriebsvorrichtung
- 10: Seil
- 11: Führungsschiene
- 110, 111: Umlenkung
- 12: Mitnehmer
- 13: Fensterscheibe
- 2: Seilausgangsgehäuse
- 20: Boden
- 200, 201: Strukturelement (Versteifungsrippe)
- 202: Aussparung (Materialschwächung)
- 21: Gehäuseabschnitt
- 210: Fußabschnitt
- 211: Rastelement
- 212: Formschlussöffnung (Schlitzöffnung)
- 22: Lagerelement (Lagerdom)
- 220: Zentrierkonus
- 221: Öffnung
- 23: Sicherungselement
- 3: Seiltrommel
- 30: Körper
- 300: Seilrille
- 31: Hohlrad
- 310: Verzahnung
- 32: Auflageelement
- 4: Trägerelement (Aggregateträger)
- 40: Flächenabschnitt
- 41: Öffnung
- 42: Formschlusselement
- 420: Rastausnehmung
- 43: Formschlusselement
- 44: Ausformung
- 440: Ausformung
- 45: Anlagering
- 46: Auflagering
- 5: Dichtelement
- 50: Dichtring
- 51: Eingriffsabschnitt
- 52: Gekrümmter Abschnitt
- 6: Antriebsrad
- 60: Körper
- 600: Außenverzahnung
- 61: Verbindungsrad
- 610: Verzahnung
- 62: Öffnung
- 7: Antriebsgehäuse
- 70: Gehäusetopf
- 71: Befestigungseinrichtung (Eingriffsbuchse)
- 710: Formschlussöffnung
- 72: Lagerelement (Lagerdom)
- 720: Öffnung
- 721: Eingriffsöffnung
- 722: Zentriereingriff
- 73: Motortopf
- 74: Schneckengehäuse
- 75: Gehäusedeckel
- 76: Elektronikgehäuse
- 760: Platine
- 761: Gehäuseplatte
- 762: Steckverbinder
- 8: Motoreinheit
- 80: Elektromotor
- 800: Antriebswelle
- 81: Antriebsschnecke
- 82: Lager
- 9: Befestigungselement
- 90: Schaft
- 91: Kopf
- D: Drehachse
- X1, X2, X3: Spiel

## Patentansprüche

1. Antriebsvorrichtung (1) für eine Verstelleinrichtung zum Verstellen eines Fahrzeugteils, insbesondere eines Fensterhebers, mit
- einem Trägerelement (4),
- einer Seiltrommel (3),
- einem an einer ersten Seite des Trägerelements (4) angeordneten Seilausgangsgehäuse (2), das ein erstes Lagerelement (22) zum drehbaren Lagern der Seiltrommel (3) um eine erste Drehachse aufweist,
- einem durch eine Motoreinheit (8) antreibbaren Antriebsrad (7) und
- einem an einer von der ersten Seite abgewandten, zweiten Seite des Trägerelements (4) angeordneten Antriebsgehäuse (7), das ein zweites Lagerelement (72) zum drehbaren Lagern des Antriebsrads (6) um eine zweite Drehachse aufweist,
wobei das Seilausgangsgehäuse (2) und das Antriebsgehäuse (7) über ein zwischen dem ersten Lagerelement (22) und dem zweiten Lagerelement (72) wirkendes Befestigungselement (9) aneinander befestigt sind,
**dadurch gekennzeichnet,**
**dass** eines der Lagerelemente (22, 72) einen konischen Abschnitt (220) und das andere der Lagerelemente (72, 22) einen Zentriereingriff (722) zum Zusammenwirken mit dem konischen Abschnitt (220) zum Zentrieren des ersten Lagerelements (22) und des zweiten Lagerelements (72) zueinander aufweist, wobei
- in einer ersten Montagestellung, in der das Seilausgangsgehäuse (2) und das Antriebsgehäuse (7) an dem Trägerelement (4) angeordnet, aber noch nicht über das Befestigungselement (9) axial zueinander verspannt sind, der konische Abschnitt (220) und der Zentriereingriff (722) ein axiales Spiel (X2) zueinander aufweisen, und
- in einer zweiten Montagestellung, in der das Seilausgangsgehäuse (2) und das Antriebsgehäuse (7) über das Befestigungselement (9) axial zueinander verspannt sind, der konische Abschnitt (220) und der Zentriereingriff (722) miteinander in Anlage sind,
wobei das Seilausgangsgehäuse (2) in zumindest einem Bereich beim Verspannen des Seilausgangsgehäuses (2) und des Antriebsgehäuses (7) über das Befestigungselement (9) zueinander elastisch verformbar ist.

2. Antriebsvorrichtung (1) nach Anspruch 1, **dadurch gekennzeichnet, dass** die erste Drehachse und die zweite Drehachse koaxial zueinander angeordnet sind.

3. Antriebsvorrichtung (1) nach Anspruch 1 oder 2, **dadurch gekennzeichnet, dass** das Befestigungselement (9) durch ein Schraubelement ausgebildet ist, das das Seilausgangsgehäuse (2) und das Antriebsgehäuse (7) axial entlang der ersten und/oder zweiten Drehachse zueinander verspannt.

4. Antriebsvorrichtung (1) nach einem der Ansprüche 1 bis 3, **dadurch gekennzeichnet, dass** das Befestigungselement (9) eine Öffnung (720) eines der Lagerelemente (22, 72) durchgreift und in das andere Lagerelement (72, 22) zur Befestigung eingreift.

5. Antriebsvorrichtung (1) nach einem der vorangehenden Ansprüche, **dadurch gekennzeichnet, dass** das Seilausgangsgehäuse (2) einen Boden (20) aufweist, von dem das erste Lagerelement (22) vorsteht, wobei der Boden (20) bei Verspannen des Seilausgangsgehäuses (2) mit dem Antriebsgehäuse (7) zumindest abschnittsweise elastisch verformbar ist.

6. Antriebsvorrichtung (1) nach Anspruch 5, **dadurch gekennzeichnet, dass** der Boden (20) zumindest ein versteifendes Strukturelement (200, 201) aufweist, in dem an zumindest einem Ort eine die Steifigkeit schwächende Aussparung (202) zum Bereitstellen einer Sollverformungsstelle gebildet ist.

7. Antriebsvorrichtung (1) nach Anspruch 6, **dadurch gekennzeichnet, dass** das mindestens eine Strukturelement (200, 201) durch eine Versteifungsrippe gebildet ist.

8. Antriebsvorrichtung (1) nach einem der vorangehenden Ansprüche, **dadurch gekennzeichnet, dass** das Seilausgangsgehäuse (2) zumindest einen radial zum ersten Lagerelement (22) beabstandeten Gehäuseabschnitt (21) aufweist, der derart an dem Trägerelement (4) festgelegt ist, dass das Seilausgangsgehäuse (2) zur ersten Drehachse drehfest an dem Trägerelement (4) gehalten ist.

9. Antriebsvorrichtung (1) nach Anspruch 8, **dadurch gekennzeichnet, dass** der Gehäuseabschnitt (21) einen Fußabschnitt (210) aufweist, der an das Trägerelement (4) angesetzt ist, wobei ein Formschlusselement (42) an dem Fußabschnitt (210) oder dem Trägerelement (4) in eine Formschlussöffnung (212) an dem jeweils anderen Bauteil formschlüssig eingreift.

10. Antriebsvorrichtung (1) nach einem der vorangehenden Ansprüche, **dadurch gekennzeichnet, dass** das Antriebsgehäuse (7) zumindest eine radial zum zweiten Lagerelement (72) beabstandete Befestigungseinrichtung (71) aufweist, über die das Antriebsgehäuse (7) derart an dem Trägerelement (4) festgelegt ist, dass das Antriebsgehäuse (7) zur zweiten Drehachse drehfest an dem Trägerelement (4) gehalten ist.

11. Antriebsvorrichtung (1) nach Anspruch 10, **dadurch gekennzeichnet, dass** ein Formschlusselement (43) an dem Trägerelement (4) oder der Befestigungseinrichtung (71) in eine Formschlussöffnung (710) an dem jeweils anderen Bauteil formschlüssig eingreift.

## Claims

1. A drive device (1) for an adjustment installation for adjusting a vehicle part, in particular a power window actuator, having
- a carrier element (4);
- a cable drum (3);
- a cable exit housing (2) which is disposed on a first side of the carrier element (4) and which has a first bearing element (22) for mounting the cable drum (3) so as to be rotatable about a first rotation axis;
- a drive wheel (7) that is drivable by a motor unit (8); and
a drive housing (7) which is disposed on a second side, facing away from the first side, of the carrier element (4) and which has a second bearing element (72) for mounting the drive wheel (6) so as to be rotatable about a second rotation axis.
wherein the cable exit housing (2) and the drive housing (7) are fastened to one another by way of a fastening element (9) which acts between the first bearing element (22) and the second bearing element (72),
**characterized in that**
one of the bearing elements (22, 72) has a conical portion (220), and the other of the bearing elements (72, 22) has centering engagement (722) for interacting with the conical portion (220) in order for the first bearing element (22) and the second bearing element (72) to be mutually centered, wherein
- in a first assembly position in which the cable exit housing (2) and the drive housing (7) are disposed on the carrier element (4) but are not yet mutually axially braced by way of the fastening element (9), the conical portion (220) and the centering engagement (722) have mutual axial play (X2); and
- in a second assembly position in which the cable exit housing (2) and the drive housing (7) are mutually axially braced by way of the fastening element (9), the conical portion (220) and the centering engagement (722) bear on one another,
wherein the cable exit housing (2) is elastically deformable in at least one region when bracing the cable exit housing (2) and the drive housing (7) to each other via the fastening element (9).

2. The drive device (1) as claimed in claim 1, **characterized in that** the first rotation axis and the second rotation axis are disposed so as to be mutually coaxial.

3. The drive device (1) as claimed in claim 1 or 2, **characterized in that** the fastening element (9) is configured by a screw element which mutually braces the cable exit housing (2) and the drive housing (7) axially along the first and/or the second rotation axis.

4. The drive device (1) as claimed in one of claims 1 to 3, **characterized in that** the fastening element (9) engages through an opening (720) of one of the bearing elements (22, 72) and for fastening engages in the other bearing element (72, 22).

5. The drive device (1) as claimed in one of the preceding claims, **characterized in that** the cable exit housing (2) has a base (20) from which the first bearing element (22) projects, wherein the base (20), when bracing the cable exit housing (2) in relation to the drive housing (7), is at least in portions elastically deformable.

6. The drive device (1) as claimed in claim 5, **characterized in that** the base (20) has at least one reinforcing structural element (200, 201) in which a rigidity-weakening recess (202) for providing a predetermined breaking point is formed in at least one location.

7. The drive device (1) as claimed in claim 6, **characterized in that** the at least one structural element (200, 201) is formed by a reinforcement rib.

8. The drive device (1) as claimed in one of the preceding claims, **characterized in that** the cable exit housing (2) has at least one housing portion (21) which is radially spaced apart from the first bearing element (22) and which is established on the carrier element (4) in such a manner that the cable exit housing (2) is held on the carrier element (4) so as to be rotationally fixed in relation to the first rotation axis.

9. The drive device (1) as claimed in claim 8, **characterized in that** the housing portion (21) has a base portion (210) which is attached to the carrier element (4), wherein a positive-lock element (42) on the base portion (210) or on the carrier element (4) engages in a positive-locking manner in a positive-lock opening (212) on the respective other component.

10. The drive device (1) as claimed in one of the preceding claims, **characterized in that** the drive housing (7) has at least one fastening installation (71) which is radially spaced apart from the second bearing element (72) and by way of which the drive housing (7) is established on the carrier element (4) in such a manner that the drive housing (7) is held on the carrier element (4) so as to be rotationally fixed in relation to the second rotation axis.

11. The drive device (1) as claimed in claim10, **characterized in that** a positive-lock element (43) on the carrier element (4) or on the fastening installation (71) engages in a positive-locking manner in a positive-lock opening (710) on the respective other component.

## Revendications

1. Dispositif d'entraînement (1) pour un système d'ajustement pour ajuster une pièce de véhicule, en particulier un lève-vitre, avec
- un élément de support (4),
- un tambour à câble (3),
- un boîtier de sortie de câble (2) disposé sur un premier côté de l'élément de support (4), qui présente un premier élément de montage (22) pour monter le tambour à câble (3) de manière à pouvoir tourner autour d'un premier axe de rotation,
- une roue d'entraînement (7) pouvant être entraînée par une unité de moteur (8), et
- un boîtier d'entraînement (7) disposé sur un second côté, opposé au premier côté, de l'élément de support (4), qui présente un second élément de montage (72) pour monter la roue d'entraînement (6) de manière à pouvoir tourner autour d'un deuxième axe de rotation,
dans lequel le boîtier de sortie de câble (2) et le boîtier d'entraînement (7) sont fixés l'un à l'autre par l'intermédiaire d'un élément de fixation (9) agissant entre le premier élément de montage (22) et le second élément de montage (72),
**caractérisé en ce**
**qu'**un des éléments de montage (22, 72) présente une section conique (220) et l'autre des éléments de montage (72, 22) présente une prise de centrage (722) pour coopérer avec la section conique (220) pour centrer le premier élément de montage (22) et le second élément de montage (72) l'un par rapport à l'autre, dans lequel
- dans une première position de montage, dans laquelle le boîtier de sortie de câble (2) et le boîtier d'entraînement (7) sont disposés sur l'élément de support (4), ne sont toutefois pas encore assemblés par serrage de manière axiale l'un par rapport à l'autre par l'intermédiaire de l'élément de fixation (9), la section conique (220) et la prise de centrage (722) présentent l'une par rapport à l'autre un jeu axial (X2), et
- dans une deuxième position de montage, dans laquelle le boîtier de sortie de câble (2) et le boîtier d'entraînement (7) sont assemblés par serrage de manière axiale l'un par rapport à l'autre par l'intermédiaire de l'élément de fixation (9), la section conique (220) et la prise de centrage (722) sont en appui l'une avec l'autre,
dans lequel le boîtier de sortie de câble (2) peut être déformé élastiquement dans au moins une zone lors de l'assemblage par serrage du boîtier de sortie de câble (2) et du boîtier d'entraînement (7) par l'intermédiaire de l'élément de fixation (9) l'un par rapport à l'autre.

2. Dispositif d'entraînement (1) selon la revendication 1, **caractérisé en ce que** le premier axe de rotation et le deuxième axe de rotation sont disposés de manière coaxiale l'un par rapport à l'autre.

3. Dispositif d'entraînement (1) selon la revendication 1 ou 2, **caractérisé en ce que** l'élément de fixation (9) est réalisé par un élément de vissage, qui assemble par serrage le boîtier de sortie de câble (2) et le boîtier d'entraînement (7) de manière axiale le long du premier et/ou deuxième axe de rotation.

4. Dispositif d'entraînement (1) selon l'une quelconque des revendications 1 à 3, **caractérisé en ce que** l'élément de fixation (9) traverse une ouverture (720) d'un des éléments de montage (22, 72) et vient en prise avec l'autre élément de montage (72, 22) aux fins de la fixation.

5. Dispositif d'entraînement (1) selon l'une quelconque des revendications précédentes, **caractérisé en ce que** le boîtier de sortie de câble (2) présente un fond (20), duquel le premier élément de montage (22) fait saillie, dans lequel le fond (20) peut être déformé élastiquement au moins par endroits lors de l'assemblage par serrage du boîtier de sortie de câble (2) avec le boîtier d'entraînement (7).

6. Dispositif d'entraînement (1) selon la revendication 5, **caractérisé en ce que** le fond (20) présente au moins un élément structurel de rigidification (200, 201), dans lequel est formé sur au moins un emplacement un évidement (202) affaiblissant la rigidité pour offrir un emplacement de déformation théorique.

7. Dispositif d'entraînement (1) selon la revendication 6, **caractérisé en ce que** l'au moins un élément structurel (200, 201) est formé par une nervure de rigidification.

8. Dispositif d'entraînement (1) selon l'une quelconque des revendications précédentes, **caractérisé en ce que** le boîtier de départ de câble (2) présente au moins une section de boîtier (21) tenue à distance de manière radiale par rapport au premier élément de montage (22), qui est fixée de telle manière à l'élément de support (4) que le boîtier de départ de câble (2) est maintenu de manière solidaire en rotation sur l'élément de support (4) par rapport au premier axe de rotation.

9. Dispositif d'entraînement (1) selon la revendication 8, **caractérisé en ce que** la section de boîtier (21) présente une section de pied (210), qui est placée sur l'élément de support (4), dans lequel un élément à complémentarité de forme (42) sur la section de pied (210) ou l'élément de support (4) vient en prise par complémentarité de forme avec une ouverture à complémentarité de forme (212) sur l'autre composant respectivement.

10. Dispositif d'entraînement (1) selon l'une quelconque des revendications précédentes, **caractérisé en ce que** le boîtier d'entraînement (7) présente au moins un système de fixation (71) tenu à distance de manière radiale par rapport au second élément de montage (72), par l'intermédiaire duquel le boîtier d'entraînement (7) est fixé à l'élément de support (4) de telle manière que le boîtier d'entraînement (7) est maintenu de manière solidaire en rotation sur l'élément de support (4) par rapport au deuxième axe de rotation.

11. Dispositif d'entraînement (1) selon la revendication 10, **caractérisé en ce qu'**un élément à complémentarité de forme (43) sur l'élément de support (4) ou le système de fixation (71) vient en prise par complémentarité de forme avec une ouverture à complémentarité de forme (710) sur l'autre composant respectivement.
